# EUROPEAN PATENT SPECIFICATION

(11) **EP 4 582 293 B1**
(45) Date of publication and mention of the grant of the patent: **03.06.2026**
(21) Application number: 24221679.4
(22) Date of filing: 19.12.2024
(51) Int. Cl.: B60L 50/16, B60L 50/61, H02K 9/19, B60L 15/32, B60K 11/02, B60K 1/02, B60L 53/24

(54) **DRIVE APPARATUS**
ANTRIEBSVORRICHTUNG
APPAREIL D'ENTRAÎNEMENT

(30) Priority: 25.12.2023 JP 2023218479
(43) Date of publication of application: 09.07.2025
(73) Proprietor: TOYOTA JIDOSHA KABUSHIKI KAISHA, Aichi-ken, 471-8571 (JP)
(72) Inventor: MASUDA, Yuto, Toyota-shi, 471-8571 (JP); OKUDA, Koichi, Toyota-shi, 471-8571 (JP); NAKAGAMI, Soma, Toyota-shi, 471-8571 (JP)
(74) Representative: D Young & Co LLP

(56) References cited:
- WO-A1-2022/131007
- DE-A1- 102020 215 827
- JP-A- 2018 121 429
- US-A1- 2019 291 570
- US-A1- 2023 182 560

## Description

### BACKGROUND OF THE INVENTION

### 1. Field of the Invention

A technology disclosed in the present specification relates to a drive apparatus.

### 2. Description of Related Art

Japanese Unexamined Patent Application Publication No. 2018-121429 (JP 2018-121429 A) discloses a vehicle having a plurality of rotating electrical machines and a plurality of electricity conversion apparatuses. In the vehicle, a rotating electrical machine and an electricity conversion apparatus electrically connected to each other are cooled by the same refrigerant route.

### SUMMARY OF THE INVENTION

The same current normally flows through a rotating electrical machine and an electricity conversion apparatus electrically connected thereto. Therefore, when one of a plurality of rotating electrical machines operates at a high load, both of the rotating electrical machine and the electricity conversion apparatus electrically connected thereto generate great heat. At this time, in the technology in JP 2018-121429 A, the rotating electrical machine and the electricity conversion apparatus are cooled by the same refrigerant route. As a result, a great difference occurs between the refrigerant route and another refrigerant route in terms of the cooling amount to be needed, and the cooling efficiency decreases. In the present specification, a technology that is able to improve the cooling efficiency in a drive apparatus is provided. US 2019/291570 A1 discloses a dual motor drive-train comprising two motors controlled by one inverter each. The motors are cooled with parallel routed from an EGW cooling system. WO 2022/131007 A1 discloses a drive system with multiple drive units and inverters in which the refrigerant can be circulated through parallel routes that are connected in a way that when a refrigerant leak occurs in any of the paths the reservoir tank can circulate the refrigerant only in the route on the non-refrigerant leak side. Valves can be controlled in a way to still efficiently cool the motor in the route that the leak occured. DE 10 2020 215827 A1 discloses an oil-cooling circuit for a drive unit and an inverter and focuses on where in the circuit to place the inverter so it is most efficiently cooled. US 2023/182560 A1 discloses an electric vehicle with four in-wheel motors, powered by a battery through inverters connected to the motors individually, all managed by a shared refrigerant-based cooling system that keeps the motors, electronics, and battery within safe operating temperatures. Each motor is controlled by one respective inverter in the same string.

A drive apparatus according to a first aspect of the present disclosure includes: a plurality of rotating electrical machines; a plurality of electricity conversion apparatuses; and a plurality of refrigerant routes provided to be parallel to each other and configured to cool the rotating electrical machines and the electricity conversion apparatuses. Each of the electricity conversion apparatuses is electrically connected to at least one of the rotating electrical machines. Each of the refrigerant routes is configured to cool at least one of the electricity conversion apparatuses and at least one of the rotating electrical machines. Each of the rotating electrical machines is electrically connected to an electricity conversion apparatus different from the at least one electricity conversion apparatus cooled by the same refrigerant route as the rotating electrical machine itself.

In the drive apparatus described above, the rotating electrical machines and the electricity conversion apparatuses electrically connected to each other are not cooled by the same refrigerant route. For example, even when one of the rotating electrical machines and an electricity conversion apparatus connected to the rotating electrical machine generate heat, the rotating electrical machine and the electricity conversion apparatus are cooled by refrigerant routes different from each other. As a result, it becomes possible to equalize a necessary cooling amount for the refrigerant routes and expect improvement in the cooling efficiency of the drive apparatus.

Details and further improvement of the technology disclosed by the present specification are described in "DETAILED DESCRIPTION OF EMBODIMENTS".

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a block diagram of an electrified vehicle including a drive apparatus 20 of a first embodiment;
FIG. 2 shows a circuit diagram of the drive apparatus 20 of the first embodiment;
FIG. 3 shows a sectional view taken along line III-III in FIG. 1;
FIG. 4 shows a sectional view similar to FIG. 3 in a drive apparatus 120 of a second embodiment;
FIG. 5 shows a sectional view similar to FIG. 3 in a drive apparatus 220 of a third embodiment; and
FIG. 6 shows a sectional view similar to FIG. 3 in a drive apparatus 320 of a fourth embodiment.

### DETAILED DESCRIPTION OF EMBODIMENTS

In a drive apparatus according to a first aspect of the present disclosure, the plurality of rotating electrical machines may include: a first rotating electrical machine; and a second rotating electrical machine. The plurality of electricity conversion apparatuses may include: a first electricity conversion apparatus electrically connected to the first rotating electrical machine; and a second electricity conversion apparatus electrically connected to the second rotating electrical machine. The plurality of refrigerant routes may include: a first refrigerant route configured to cool the first electricity conversion apparatus and the second rotating electrical machine; and a second refrigerant route configured to cool the second electricity conversion apparatus and the first rotating electrical machine. However, in another embodiment, the rotating electrical machines may include three or more rotating electrical machines. In this case, the electricity conversion apparatuses may include three or more electricity conversion apparatuses, and the refrigerant routes may include three or more refrigerant routes.

The drive apparatus according to the first aspect of the present disclosure may further include: a first oil cooler configured to cool the first rotating electrical machine; and a first oil pump configured to supply oil to the first rotating electrical machine via the first oil cooler. The second refrigerant route may be configured to cool the oil in the first oil cooler.

According to such a configuration, the first rotating electrical machine can be cooled and the rotation of the first rotating electrical machine can be caused to be smoother by the oil.

The drive apparatus according to the first aspect of the present disclosure may further include: a second oil cooler configured to cool the second rotating electrical machine; and a second oil pump configured to supply oil to the second rotating electrical machine via the second oil cooler. The first refrigerant route may be configured to cool the oil in the second oil cooler.

According to such a configuration, the second rotating electrical machine can be cooled and the rotation of the second rotating electrical machine can be caused to be smoother by the oil.

The drive apparatus according to the first aspect of the present disclosure may further include a casing that accommodates the first rotating electrical machine and the second rotating electrical machine. However, in another embodiment, the drive apparatus may include a first casing that accommodates the first rotating electrical machine and a second casing that accommodates the second rotating electrical machine.

The drive apparatus according to the first aspect of the present disclosure may further include first cooling equipment in abutment against at least a part of a front surface of a first stator of the first rotating electrical machine. The second refrigerant route may be configured to cool the first rotating electrical machine via the first cooling equipment. Here, "the cooling equipment" is an apparatus including a flow path through which a refrigerant is caused to circulate and is a so-called water jacket, for example.

According to such a configuration, the first rotating electrical machine can be efficiently cooled by the first cooling equipment.

The drive apparatus according to the first aspect of the present disclosure may further include second cooling equipment in abutment against at least a part of a front surface of a second stator of the second rotating electrical machine. The first refrigerant route may be configured to cool the second rotating electrical machine via the second cooling equipment.

According to such a configuration, the second rotating electrical machine can be efficiently cooled by the second cooling equipment.

The drive apparatus according to the first aspect of the present disclosure may further include: a first oil cooler configured to cool the first rotating electrical machine; and a first oil pump configured to supply oil to the first rotating electrical machine via the first oil cooler. The second refrigerant route may be further configured to cool the oil in the first oil cooler. The first cooling equipment and the first oil cooler may be connected to each other in series in the second refrigerant route.

According to such a configuration, the first rotating electrical machine can be quickly cooled by the oil and the first cooling equipment.

The drive apparatus according to the first aspect of the present disclosure may further include: a second oil cooler configured to cool the second rotating electrical machine; and a second oil pump configured to supply oil to the second rotating electrical machine via the second oil cooler. The first refrigerant route may be further configured to cool the oil in the second oil cooler. The second cooling equipment and the second oil cooler may be connected to each other in series in the first refrigerant route.

According to such a configuration, the second rotating electrical machine can be quickly cooled by the oil and the second cooling equipment.

In the drive apparatus according to the first aspect of the present disclosure, the drive apparatus may be configured to be mounted on a vehicle. The drive apparatus may configure a charging circuit that supplies a charging current supplied from a power source outside the vehicle to an electricity storage apparatus of the vehicle via a neutral point of the first rotating electrical machine.

In the drive apparatus described above, only the first rotating electrical machine and the first electricity apparatus operate when the charging current is supplied to the electricity storage apparatus of the vehicle via the neutral point of the first rotating electrical machine. In this case, the first rotating electrical machine and the first electricity apparatus generate heat, and the second rotating electrical machine and the second electricity apparatus do not generate heat. Therefore, the first refrigerant route that cools the second electricity apparatus that is not generating heat can efficiently cool the first rotating electrical machine that generates heat.

The drive apparatus according to the first aspect of the present disclosure may further include: a first oil cooler configured to cool the first rotating electrical machine; a first oil pump configured to supply oil to the first rotating electrical machine via the first oil cooler; and a control apparatus configured to control the first oil pump. The second refrigerant route may be configured to cool the oil in the first oil cooler. The control apparatus may drive the first oil pump in at least a part of a period of charging time in which the charging current is supplied to the electricity storage apparatus of the vehicle via the neutral point of the first rotating electrical machine.

According to such a configuration, the first oil pump can supply oil cooled by the first refrigerant route that cools the second electricity apparatus that is not generating heat to the first rotating electrical machine that generates heat during the period of charging time.

The drive apparatus according to the first aspect of the present disclosure may further include: a second oil cooler configured to cool the second rotating electrical machine; and a second oil pump configured to supply oil to the second rotating electrical machine via the second oil cooler. The first refrigerant route may be configured to cool the oil in the second oil cooler. The control apparatus may stop driving of the second oil pump in at least a part of the period of charging time.

According to such a configuration, the oil cooled by the second refrigerant route that cools the first electricity apparatus that is generating heat is not supplied to the second rotating electrical machine that is not generating heat during the period of charging time. As a result, the second oil pump can be prevented from being unnecessarily driven.

In the drive apparatus according to the first aspect of the present disclosure, the drive apparatus may be configured to be mounted on a vehicle. The first rotating electrical machine may be configured to transmit a motive power to a first drive wheel of a pair of left and right drive wheels of the vehicle, and the second rotating electrical machine may be configured to transmit a motive power to a second drive wheel of the pair of left and right drive wheels of the vehicle. However, in another embodiment, the first rotating electrical machine and the second rotating electrical machine may drive both of the pair of left and right drive wheels of the vehicle. The first rotating electrical machine may transmit a motive power to a drive wheel positioned on the front side of the vehicle, and the second rotating electrical machine may transmit a motive power to a drive wheel positioned on the rear side of the vehicle.

### First Embodiment

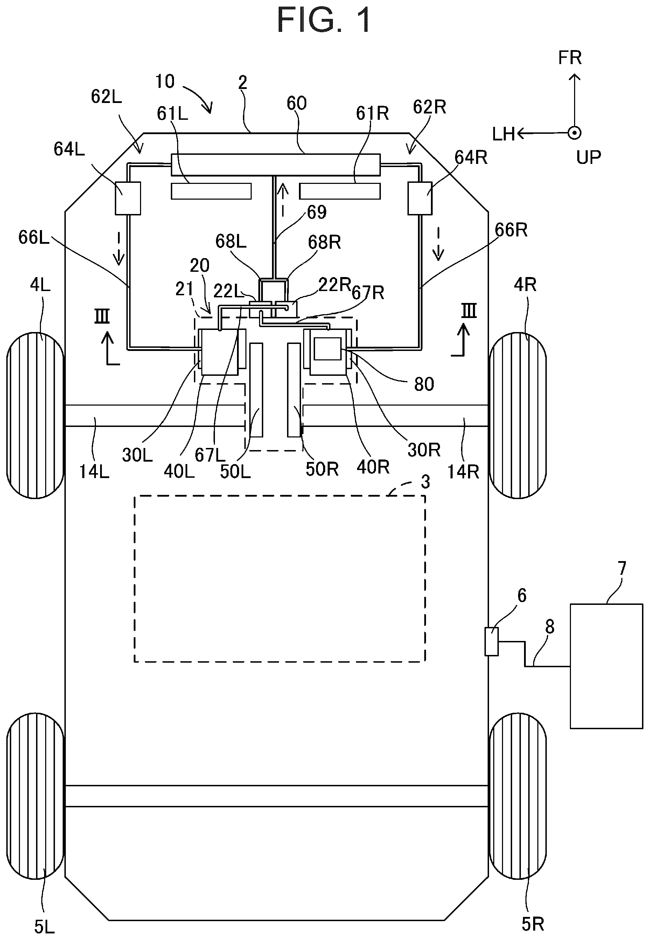

FIG. 1 shows a block diagram of an electrified vehicle 10 including a drive apparatus 20 of a first embodiment seen from above. In the present specification, the front side of the electrified vehicle 10 (in other words, the upper side of the plane of the paper of FIG. 1) may be simply referred to as "front", and the opposite side may be simply referred to as "rear". The left side of the electrified vehicle 10 (in other words, the left side of the plane of the paper of FIG. 1) may be simply referred to as "left", and the opposite side may be simply referred to as "right". The upper side of the electrified vehicle 10 (in other words, the near side of the plane of the paper of FIG. 1) may be simply referred to as "upper", and the opposite side may be simply referred to as "lower".

The electrified vehicle 10 includes a vehicle body 2, a battery pack 3, a pair of left and right front wheels 4R, 4L, a pair of left and right rear wheels 5R, 5L, a charging inlet 6, a drive apparatus 20, a radiator 60, a pair of left and right cooling fans 61R, 61L, a first refrigerant route 62R, a second refrigerant route 62L, a first radiator pump 64R, and a second radiator pump 64L. The electrified vehicle 10 travels by driving the pair of left and right front wheels 4R, 4L with use of the drive apparatus 20. "The electrified vehicle" in the present specification includes a rechargeable battery electric vehicle charged by an external power source, a fuel cell electric vehicle of which power source is a fuel cell, and a hybrid electric vehicle also having an engine, for example. The expression of "a pair of left and right" may be simply hereinafter described as "a pair".

The drive apparatus 20 includes a casing 21, a pair of electric motors 30R, 30L, a pair of motive power transmission mechanisms 50R, 50L, a pair of oil coolers 22R, 22L, a pair of inverters 40R, 40L, and a control apparatus 80.

Both of the pair of electric motors 30R, 30L are rotating electrical machines. The drive apparatus 20 drives the pair of front wheels 4R, 4L by supplying electricity of the battery pack 3 to the pair of electric motors 30R, 30L via the pair of inverters 40R, 40L. In other words, the pair of front wheels 4R, 4L is drive wheels of the electrified vehicle 10. In a modified example, the pair of rear wheels 5R, 5L may be drive wheels of the electrified vehicle 10 or the pair of front wheels 4R, 4L and the pair of rear wheels 5R, 5L may be the drive wheels of the electrified vehicle 10.

The casing 21 accommodates the pair of electric motors 30R, 30L and the pair of motive power transmission mechanisms 50R, 50L. In order to facilitate understanding, the shape of the casing 21 is indicated by broken lines, and apparatuses such as the pair of electric motors 30R, 30L accommodated in the casing 21 are indicated by solid lines in FIG. 1. The pair of inverters 40R, 40L includes the first inverter 40R positioned on the right side and the second inverter 40L positioned on the left side and are disposed on an upper surface of the casing 21. The pair of motive power transmission mechanisms 50R, 50L includes the first motive power transmission mechanism 50R positioned on the right side and the second motive power transmission mechanism 50L positioned on the left side. The pair of electric motors 30R, 30L includes the first electric motor 30R positioned on the right side and the second electric motor 30L positioned on the left side. The first motive power transmission mechanism 50R transmits the motive power of the first electric motor 30R to a right drive shaft 14R connected to the right front wheel 4R. The first motive power transmission mechanism 50R has a plurality of gears, bearings, and the like. The first motive power transmission mechanism 50R functions as a decelerator that decelerates the rotational speed of the first electric motor 30R and rotates the right drive shaft 14R, for example. Similarly, the second motive power transmission mechanism 50L transmits the motive power of the second electric motor 30L to a left drive shaft 14L connected to the left front wheel 4L. As shown in FIG. 1, the right drive shaft 14R and the left drive shaft 14L are separated from each other at the center of the electrified vehicle 10 in the left-right direction. Therefore, the pair of front wheels 4R, 4L is independently driven by the pair of electric motors 30R, 30L. In a modified example, each of the drive shafts 14R, 14L may be connected to each other at a central portion. In this case, the two electric motors 30R, 30L may drive the pair of front wheels 4R, 4L.

The charging inlet 6 is disposed on a right side surface of the vehicle body 2. The charging inlet 6 is configured to be connected to an external power source 7 (for example, a charging stand) via an electricity cable 8. When the charging inlet 6 is connected to the external power source 7, the charging electricity of the external power source 7 is supplied to the battery pack 3.

The pair of oil coolers 22R, 22L is disposed on a front surface of the casing 21. The pair of oil coolers 22R, 22L includes the first oil cooler 22R positioned on the right side and the second oil cooler 22L positioned on the left side.

The radiator 60 is disposed on a front end portion of the vehicle body of the electrified vehicle 10. The radiator 60 is an apparatus that performs heat exchange between a refrigerant that circulates through each of the refrigerant route 62R and the refrigerant route 62L and the outside air. The refrigerant is liquid such as an antifreeze liquid or water, for example. The radiator 60 cools the refrigerant by wind generated by the cooling fans 61R, 61L, for example. The first radiator pump 64R circulates the refrigerant to the first refrigerant route 62R. The first refrigerant route 62R includes a first upstream route 66R, a first midstream route 67R, and a first downstream route 68L. Similarly, the second radiator pump 64L circulates the refrigerant to the second refrigerant route 62L. The second refrigerant route 62L includes a second upstream route 66L, a second midstream route 67L, and a second downstream route 68R. Each of the refrigerant routes 62R, 62L is merged at a merging route 69. In other words, in this embodiment, a common refrigerant flows in the first refrigerant route 62R and the second refrigerant route 62L. The merging route 69 connects the radiator 60 and each of the downstream routes 68R, 68L to each other.

As indicated by a broken-line arrow in FIG. 1, the first radiator pump 64R pressure-feeds the refrigerant to the first upstream route 66R. As a result, the refrigerant reaches the first inverter 40R. The refrigerant is supplied to the second oil cooler 22L via the first midstream route 67R. The refrigerant that has passed through the second oil cooler 22L returns to the radiator 60 via the first downstream route 68L and the merging route 69. Similarly, also in the second refrigerant route 62L, the refrigerant that is pressure-fed to the second upstream route 66L by the second radiator pump 64L flows to the second inverter 40L, the second midstream route 67L, the first oil cooler 22R, the second downstream route 68R, the merging route 69, and the radiator 60 in the stated order.

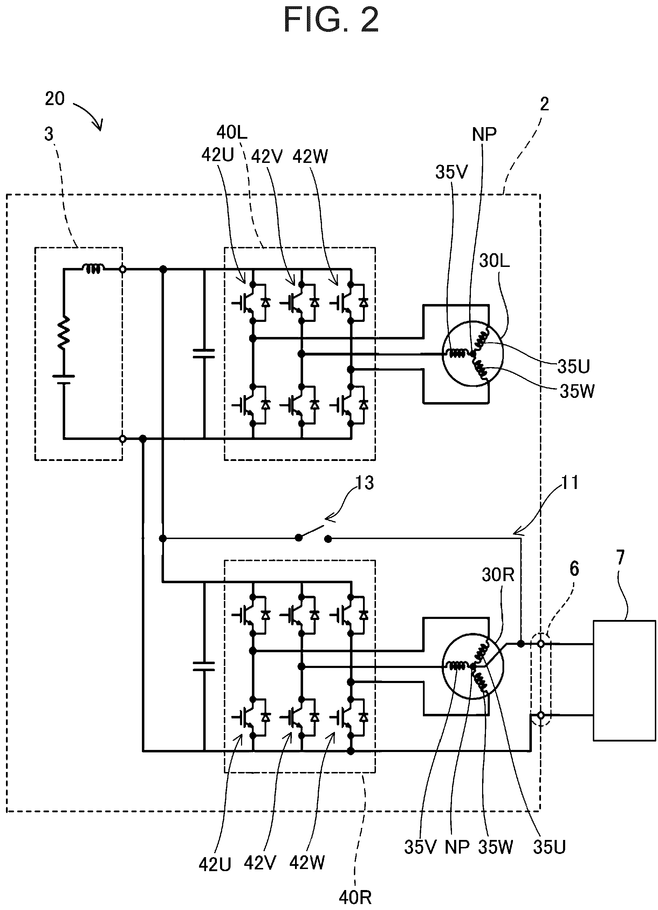

With reference to FIG. 2, an electric circuit of the drive apparatus 20 is described. The drive apparatus 20 includes an electricity supply circuit 11 in addition to the pair of electric motors 30R, 30L and the pair of inverters 40R, 40L. The electricity supply circuit 11 is a circuit for supplying DC charging electricity supplied from the external power source 7 to the battery pack 3. The first electric motor 30R is a three-phase motor including a U-phase coil 35U, a V-phase coil 35V, and a W-phase coil 35W. The first inverter 40R includes a U-phase arm 42U, a V-phase arm 42V, and a W-phase arm 42W. Each of the phase arms 42U, 42V, 42W has two switching elements in series. The first inverter 40R is an electricity conversion apparatus that converts the DC electricity supplied from the battery pack 3 to three-phase AC electricity suitable for the driving of the first electric motor 30R by turning the switching elements of each of the phase arms 42U, 42V, 42W ON and OFF. One end of each of the U-phase coil 35U, the V-phase coil 35V, and the W-phase coil 35W of the first electric motor 30R is connected to each other at a neutral point NP. The other end of the U-phase coil 35U is connected to a midpoint of the two switching elements of the U-phase arm 42U, the other end of the V-phase coil 35V is connected to a midpoint of the two switching elements of the V-phase arm 42V, and the W-phase coil 35W is connected to a midpoint of the two switching elements of the W-phase arm 42W. As above, the first inverter 40R is electrically connected to the first electric motor 30R.

Similarly, the second electric motor 30L includes the U-phase coil 35U, the V-phase coil 35V, and the W-phase coil 35W, and the second inverter 40L includes the U-phase arm 42U, the V-phase arm 42V, and the W-phase arm 42W. Each of the phase arms 42U, 42V, 42W has two switching elements in series. The second inverter 40L is an electricity conversion apparatus that converts the DC electricity supplied from the battery pack 3 to three-phase AC electricity suitable for the driving of the second electric motor 30L by turning the switching elements of each of the phase arms 42U, 42V, 42W ON and OFF. One end of each of the U-phase coil 35U, the V-phase coil 35V, and the W-phase coil 35W is connected to each other at the neutral point NP, the other end of the U-phase coil 35U is connected to a midpoint of the two switching elements of the U-phase arm 42U, the other end of the V-phase coil 35V is connected to a midpoint of the two switching elements of the V-phase arm 42V, and the W-phase coil 35W is connected to a midpoint of the two switching elements of the W-phase arm 42W. As above, the second inverter 40L is electrically connected to the second electric motor 30L.

In the electricity supply circuit 11 of this embodiment, one terminal of the charging inlet 6 is connected to a positive electrode of the battery pack 3 via the neutral point NP of the first electric motor 30R and the first inverter 40R. The electricity supply circuit 11 supplies the charging electricity supplied from the external power source 7 to the neutral point NP of the first electric motor 30R. The other terminal of the charging inlet 6 is connected to a negative electrode of the battery pack 3 via the first inverter 40R. The electricity supply circuit 11 supplies the charging electricity to the battery pack 3 via the neutral point NP of the first electric motor 30R. As a result, the first electric motor 30R and the first inverter 40R can function as three voltage boosting circuits parallelly connected to each other between the charging inlet 6 and the battery pack 3. As a result, the drive apparatus 20 can boost the output voltage of the external power source 7 with use of the first electric motor 30R and the first inverter 40R. As a result, quick charging can be executed even when the output voltage of the external power source 7 is lower than the voltage across the battery pack 3. One terminal of the charging inlet 6 is directly connected to the positive electrode of the battery pack 3 via a switch 13. The electricity supply circuit 11 can cause the output voltage of the external power source 7 to bypass the neutral point NP of the first electric motor 30R by turning ON the switch 13 when the output voltage of the external power source 7 is equivalent to the voltage across the battery pack 3. Although illustration is omitted, the electricity supply circuit 11 further includes a charging unit including a relay, a capacitor, and the like. The charging unit is connected to the neutral point NP and the first inverter 40R.

When the charging inlet 6 is connected to the external power source 7 and the switch 13 is turned OFF, the charging electricity of the external power source 7 is supplied to the neutral point NP of the first electric motor 30R. A period of time in which the charging electricity is supplied to the battery pack 3 via the supply to the neutral point NP of the first electric motor 30R may be hereinafter referred to as "a period of charging time". The current flows to the coils 35U, 35V, 35W of each phase of the first electric motor 30R over the period of charging time. As a result, the coils 35U, 35V, 35W of each phase generate heat, and the temperature of the first electric motor 30R rises. During the period of charging time, the switching elements of each of the phase arms 42U, 42V, 42W of the first inverter 40R electrically connected to the first electric motor 30R are turned ON and OFF. As a result, the temperature of the first inverter 40R rises. Meanwhile, even when the charging inlet 6 is connected to the external power source 7, the current does not flow to the coils 35U, 35V, 35W of each phase of the second electric motor 30L, and hence the temperature of the second electric motor 30L does not rise. Therefore, the temperature of the second inverter 40L electrically connected to the second electric motor 30L does not rise either.

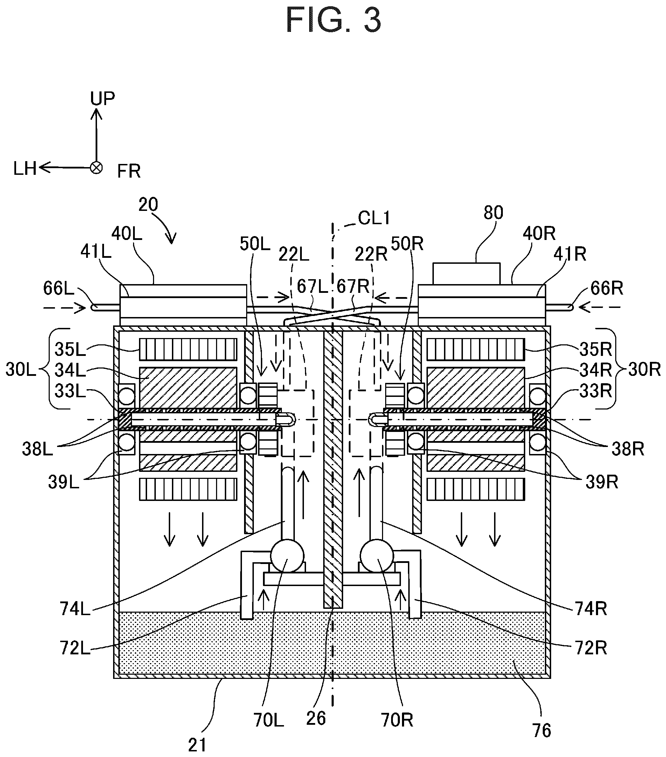

A detailed structure of the drive apparatus 20 is described with reference to FIG. 3. FIG. 3 is a sectional view of the drive apparatus taken along line III-III in FIG. 1. The drive apparatus 20 further includes a pair of oil pumps 70R, 70L, a pair of suction pipes 72R, 72L, and a pair of discharge pipes 74R, 74L accommodated in the casing 21 in addition to the pair of electric motors 30R, 30L and the like described above. The casing 21 includes a dividing wall 26 extending to the lower side at the center in the left-right direction. The dividing wall 26 is a wall that separates a right space and a left space of the casing 21 from each other. However, the dividing wall 26 does not reach to a bottom surface of the casing 21. The right space and the left space of the casing 21 communicate with each other in a lower portion of the casing 21. The first electric motor 30R and the first motive power transmission mechanism 50R are disposed on the right side of the dividing wall 26. The second electric motor 30L and the second motive power transmission mechanism 50L are disposed on the left side of the dividing wall 26. The drive apparatus 20 is configured to be left-right symmetrical about the center of the dividing wall 26, in other words, a center line CL1. Therefore, a configuration positioned on the right side of the center line CL1 of the drive apparatus 20 is mainly described below.

The first electric motor 30R includes a motor shaft 33R, a rotor 34R, and a stator 35R. The motor shaft 33R passes through the rotor 34R and extends in the left-right direction, and is rotatably maintained in the casing 21 by a pair of bearings 39R. The motor shaft 33R extends to the left side so as to exceed a left end of the rotor 34R and is connected to the gears of the first motive power transmission mechanism 50R. When the motor shaft 33R rotates as a result of the rotor 34R rotating, the gears of the first motive power transmission mechanism 50R rotate. Although illustration is omitted, the first motive power transmission mechanism 50R rotates the right drive shaft 14R (see FIG. 1) via the gears. In other words, the first motive power transmission mechanism 50R transmits the motive power of the first electric motor 30R to the right drive shaft 14R. The motor shaft 33R has a hollow structure. A plurality of through-holes 38R is formed in a side surface of the motor shaft 33R. The through-holes 38R communicate with the inner space of the motor shaft 33R and the inner space of the casing 21. In FIG. 1, only the two through-holes 38R positioned in a right end out of the through-holes 38R are denoted by reference characters, and reference characters of the other through-holes 38R are omitted.

Similarly, the second electric motor 30L includes a motor shaft 33L, a rotor 34L, and a stator 35L. The motor shaft 33L passes through the rotor 34L and extends in the left-right direction, and is rotatably maintained in the casing 21 by a pair of bearings 39L. The second motive power transmission mechanism 50L also transmits the motive power of the second electric motor 30L to the left drive shaft 14L via a gear and the like connected to the motor shaft 33L of the second electric motor 30L.

As shown in FIG. 3, oil 76 is accumulated in a lower portion of the casing 21. The casing 21 forms a so-called oil sump. The pair of oil pumps 70R, 70L includes the first oil pump 70R positioned on the right side and the second oil pump 70L positioned on the left side. The first oil pump 70R is fixed to the dividing wall 26 from the right side. The first oil pump 70R is a pump that supplies the oil 76 to the first electric motor 30R. The pair of suction pipes 72R, 72L includes the first suction pipe 72R positioned on the right side and the second suction pipe 72L positioned on the left side. The first suction pipe 72R extends to the upper side from the oil sump, bends to the left side, and is connected to a suction port of the first oil pump 70R. The pair of discharge pipes 74R, 74L includes the first discharge pipe 74R positioned on the right side and the second discharge pipe 74L positioned on the left side. The first discharge pipe 74R extends to the upper side from a discharge port of the first oil pump 70R. The first discharge pipe 74R bends to the front side (in other words, the far side of the plane of the paper of FIG. 3), passes through a side wall of the casing 21 on the front side thereof, extends to the upper side along an outer surface of the side wall on the front side, and passes through the inside of the first oil cooler 22R disposed on the side wall on the front side. After the first discharge pipe 74R passes through the first oil cooler 22R, the first discharge pipe 74R passes through the side wall of the casing 21 on the front side thereof again, enters the inside of the casing 21, and is connected to a left end of the motor shaft 33R of the first electric motor 30R. The first oil pump 70R supplies the oil 76 to the motor shaft 33R of the first electric motor 30R via the first suction pipe 72R and the first discharge pipe 74R. The oil 76 supplied to the motor shaft 33R moves to the inner space of the casing 21 from the inner space of the motor shaft 33R via the through-holes 38R. The oil 76 falls in the inner space of the casing 21 and is accumulated in the lower portion of the casing 21 again. As above, the first oil pump 70R circulates the oil 76. The oil 76 cools the first electric motor 30R and causes the rotation of the first electric motor 30R to be smoother. The oil 76 also lubricates the gears of the first motive power transmission mechanism 50R. As a result, the first motive power transmission mechanism 50R smoothly rotates. In FIG. 3 to FIG. 6, the flow of the oil 76 is indicated by solid-line arrows, and the flow of the refrigerant is indicated by broken-line arrows.

Similarly, the second oil pump 70L is fixed to the dividing wall 26 from the left side. The second oil pump 70L is a pump that supplies the oil 76 to the second electric motor 30L via the second suction pipe 72L and the second discharge pipe 74L. The second discharge pipe 74L passes through the second oil cooler 22L and is connected to a right end of the motor shaft 33L of the second electric motor 30L. As a result, the oil 76 is supplied to the second electric motor 30L. As indicated by solid-line arrows in FIG. 3, the second oil pump 70L circulates the oil 76. The oil 76 cools the second electric motor 30L and causes the rotation of the second electric motor 30L and the second motive power transmission mechanism 50L to be smoother. As above, in this embodiment, the first electric motor 30R and the second electric motor 30L are cooled by an oil-cooling cooling system.

The control apparatus 80 is disposed on the upper side of the first inverter 40R. The control apparatus 80 is a computer that has a CPU and a memory and controls the pair of cooling fans 61R, 61L, the pair of radiator pump 64R, 64L, and the pair of oil pumps 70R, 70L. The control apparatus 80 controls each of the cooling fans 61R, 61L and each of the pumps 64R, 64L, 70R, 70L on the basis of instructions from a higher-level vehicle control unit (not shown). In the modified example, the control apparatus 80 may be disposed on a side surface of any of the right side, the left side, the front side, and the rear side of the first inverter 40R. The number of the control apparatuses 80 is not limited to one, and the control apparatuses 80 may be disposed on both of left and right side surfaces of the first inverter 40R, for example.

As described above, the first discharge pipe 74R passes through the inside of the first oil cooler 22R and is connected to the motor shaft 33R of the first electric motor 30R. As described with reference to FIG. 1, the refrigerant cooled by the radiator 60 circulates to the first oil cooler 22R via the second refrigerant route 62L. Therefore, the refrigerant in the first oil cooler 22R cools the oil 76 in the first discharge pipe 74R. The oil 76 absorbs heat from the first electric motor 30R. In other words, the second refrigerant route 62L cools the first electric motor 30R out of the pair of electric motors 30R, 30L via the oil 76.

Similarly, the second discharge pipe 74L passes through the inside of the second oil cooler 22L and is connected to the motor shaft 33L of the second electric motor 30L. As described with reference to FIG. 1, the refrigerant cooled by the radiator 60 circulates to the second oil cooler 22L via the first refrigerant route 62R. Therefore, the refrigerant in the second oil cooler 22L cools the oil 76 in the second discharge pipe 74L. The oil 76 absorbs heat from the second electric motor 30L. In other words, the first refrigerant route 62R cools the second electric motor 30L out of the pair of electric motors 30R, 30L via the oil 76.

The first inverter 40R includes a first inverter cooler 41R. One end of the first inverter cooler 41R is connected to the first upstream route 66R of the first refrigerant route 62R, and the other end of the first inverter cooler 41R is connected to the first midstream route 67R. The first midstream route 67R is connected to the first downstream route 68L (see FIG. 1) via the second oil cooler 22L. The first inverter cooler 41R has a flow path through which the refrigerant is caused to circulate, and the first inverter cooler 41R cools the first inverter 40R by circulating the refrigerant. In other words, the first refrigerant route 62R cools the first inverter 40R out of the pair of inverters 40R, 40L via the refrigerant.

Similarly, the second inverter 40L includes a second inverter cooler 41L. One end of the second inverter cooler 41L is connected to the second upstream route 66L of the second refrigerant route 62L, and the other end of the second inverter cooler 41L is connected to the second midstream route 67L. The second midstream route 67L is connected to the second downstream route 68R (see FIG. 1) via the first oil cooler 22R. The second inverter cooler 41L has a flow path through which the refrigerant is caused to circulate, and the second inverter cooler 41L cools the second inverter 40L by circulating the refrigerant. In other words, the second refrigerant route 62L cools the second inverter 40L out of the pair of inverters 40R, 40L via the refrigerant.

As shown in FIG. 3, the first midstream route 67R of the first refrigerant route 62R connects the first inverter cooler 41R of the first inverter 40R positioned on the right side of the center line CL1 and the second oil cooler 22L positioned on the left side of the center line CL1 to each other. The second midstream route 67L of the second refrigerant route 62L connects the second inverter cooler 41L of the second inverter 40L positioned on the left side of the center line CL1 and the first oil cooler 22R positioned on the right side of the center line CL1 to each other. Therefore, the first midstream route 67R extends to the left side from the right side of the center line CL1 so as to cross the center line CL1, and the second midstream route 67L extends to the right side from the left side of the center line CL1 so as to cross the center line CL1. As a result, each of the midstream routes 67R, 67L intersect with each other when seen from the vehicle rear side.

As described above, the first electric motor 30R is electrically connected to the first inverter 40R. The first electric motor 30R is cooled by the same second refrigerant route 62L as the second inverter 40L. In other words, the first electric motor 30R is electrically connected to the first inverter 40R different from the second inverter 40L cooled by the same refrigerant route 62L as the first electric motor 30R.

Similarly, the second electric motor 30L is electrically connected to the second inverter 40L. The second electric motor 30L is cooled by the same first refrigerant route 62R as the first inverter 40R. In other words, the second electric motor 30L is electrically connected to the second inverter 40L different from the first inverter 40R cooled by the same refrigerant route 62R as the second electric motor 30L.

### Effects of Present Embodiment

The control apparatus 80 drives the pair of cooling fans 61R, 61L, the second radiator pump 64L, and the first oil pump 70R in accordance with the charging inlet 6 being connected to the external power source 7 via the electricity cable 8 and the switch 13 being turned OFF. As a result, a refrigerant cooled by the pair of cooling fans 61R, 61L is supplied to the first oil cooler 22R via the second refrigerant route 62L during the period of charging time. The oil 76 cooled by the refrigerant in the first oil cooler 22R is supplied to the first electric motor 30R. The second refrigerant route 62L supplies a refrigerant to the first oil cooler 22R via the second inverter cooler 41L of the second inverter 40L. The refrigerant that has passed through the second inverter 40L that is not generating heat is supplied to the first oil cooler 22R, and the oil 76 cooled by the refrigerant cools the first electric motor 30R driven during the period of charging time. In other words, in the drive apparatus 20 of this embodiment, the first electric motor 30R and the first inverter 40R electrically connected to each other are not cooled by the same second refrigerant route 62L. As a result, the necessary cooling amount can be equalized for each of the refrigerant routes 62R, 62L, and the cooling efficiency in the drive apparatus 20 can be improved.

The control apparatus 80 drives the first radiator pump 64R and stops the driving of the second oil pump 70L during the period of charging time. As a result, the first inverter 40R that operates during the period of charging time can be cooled by the refrigerant that circulates in the first refrigerant route 62R. The oil 76 is not supplied to the second electric motor 30L during the period of charging time. As described above, during the period of charging time, the second electric motor 30L is not driven, and hence the temperature of the second electric motor 30L does not rise. As above, in the drive apparatus 20 of this embodiment, the driving of the second oil pump 70L is stopped during the period of charging time, and hence the second oil pump 70L can be prevented from being unnecessarily driven to supply the oil 76 to the second electric motor 30L that is not driven.

### Second Embodiment

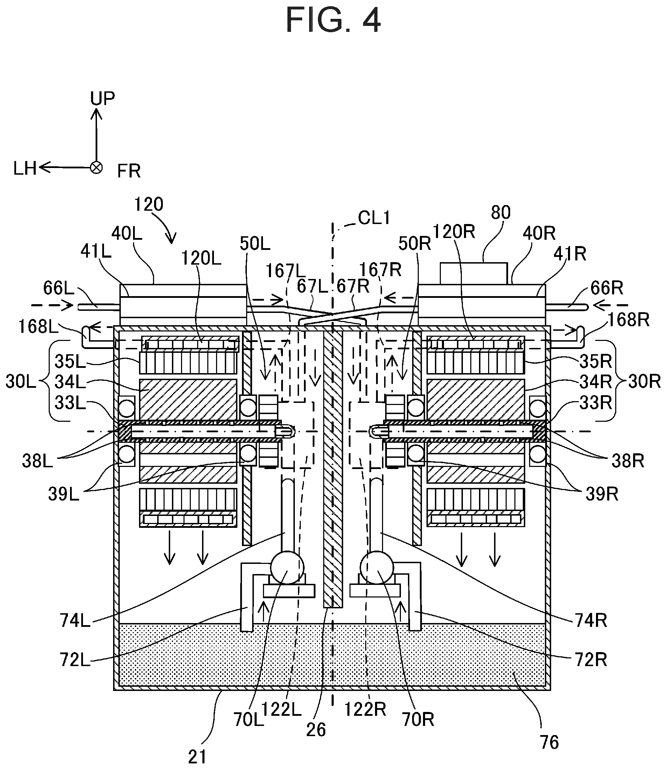

With reference to FIG. 4, a drive apparatus 120 of a second embodiment is described. The drive apparatus 120 of this embodiment includes a pair of cooling equipment 120R, 120L in addition to the configuration of the drive apparatus 20 of the first embodiment. The pair of cooling equipment 120R, 120L includes the first cooling equipment 120R that cools the first electric motor 30R, and the second cooling equipment 120L that cools the second electric motor 30L. In other words, in this embodiment, the first electric motor 30R and the second electric motor 30L are cooled by an oil-water-cooling cooling system obtained by combining oil cooling and water cooling. The first cooling equipment 120R is in abutment against an outer surface of the stator 35R of the first electric motor 30R. The first cooling equipment 120R cools the stator 35R by causing a refrigerant to pass therethrough. The first cooling equipment 120R is connected to a first oil cooler 122R via a second connection pipe 167R of the second refrigerant route 62L (see FIG. 1). The refrigerant that has passed through the first cooling equipment 120R returns to the radiator 60 via a second downstream route 168R and the merging route 69 (see FIG. 1).

Similarly, the second cooling equipment 120L is in abutment against an outer surface of the stator 35L of the second electric motor 30L. The second cooling equipment 120L is connected to a second oil cooler 122L via a first connection pipe 167L of the first refrigerant route 62R (see FIG. 1). The refrigerant that has passed through second cooling equipment 120L returns to the radiator 60 via a first downstream route 168L and the merging route 69 (see FIG. 1).

In the drive apparatus 120 of this embodiment, the first electric motor 30R is cooled by the refrigerant in addition to the oil 76. As a result, the first electric motor 30R can be quickly cooled by the oil 76 and the refrigerant.

### Third Embodiment

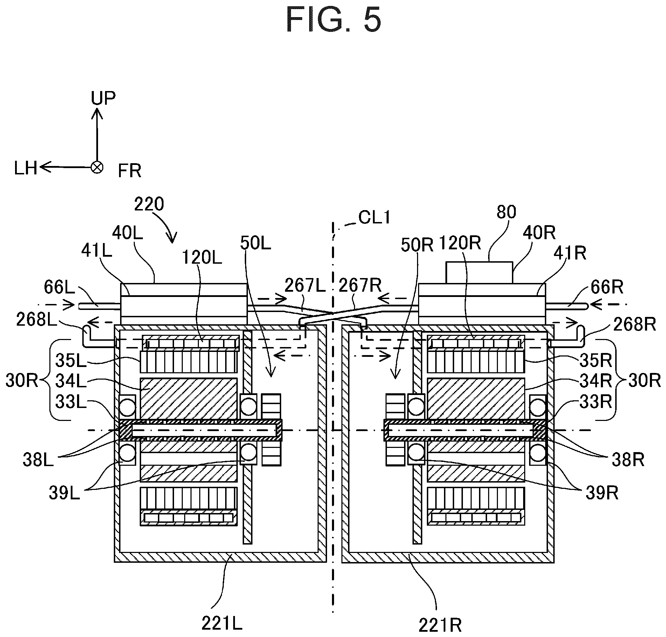

With reference to FIG. 5, a drive apparatus 220 of a third embodiment is described. When compared to the drive apparatus 120 of the second embodiment described above, the drive apparatus 220 of this embodiment does not include the pair of oil coolers 22R, 22L and the pair of oil pumps 70R, 70L. In other words, in this embodiment, the first electric motor 30R and the second electric motor 30L are cooled by a water-cooling cooling system. Therefore, in the drive apparatus 220 of this embodiment, the first inverter cooler 41R of the first inverter 40R and the second cooling equipment 120L are directly connected to each other via a first midstream route 267R, and the second inverter cooler 41L of the second inverter 40L and the first cooling equipment 120R are directly connected to each other via a second midstream route 267L. As with the second embodiment, the refrigerant that has passed through the first cooling equipment 120R returns to the radiator 60 via a first downstream route 268R and the merging route 69 (see FIG. 1), and the refrigerant that has passed through the second cooling equipment 120L returns to the radiator 60 via a second downstream route 268L and the merging route 69 (see FIG. 1).

In the drive apparatus 220 of this embodiment, the oil 76 (see FIG. 3) is not accumulated in the lower portion of the casing. Therefore, in the drive apparatus 220, a first casing 221R that accommodates the first electric motor 30R and a second casing 221L that accommodates the second electric motor 30L are included. Each of the casings 221R, 221L are arrayed in the left-right direction.

### Fourth Embodiment

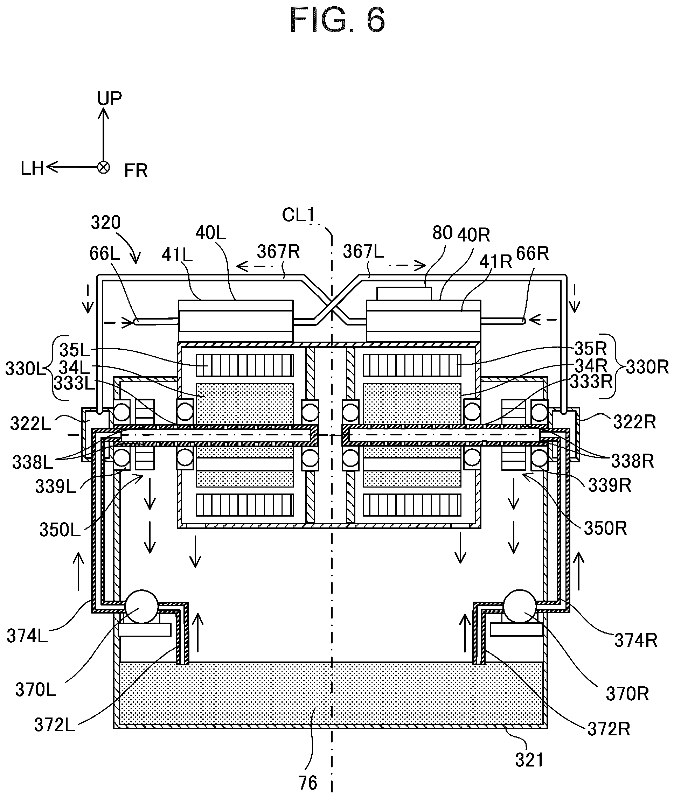

With reference to FIG. 6, a drive apparatus 320 of the fourth embodiment is described. The drive apparatus 320 of this embodiment basically has a configuration similar to that of the drive apparatus 20 of the first embodiment, but the positions in which each apparatus is disposed are different. In this embodiment, each of electric motors 330R, 330L is arrayed in a central portion of a casing 321 in the left-right direction. A motor shaft 333R of the first electric motor 330R exceeds a right end of the rotor 34R and extends to the right side. The motor shaft 333R is connected to a first motive power transmission mechanism 350R positioned on the right side of the first electric motor 330R. Similarly, a motor shaft 333L of the second electric motor 330L exceeds a left end of the rotor 34L and extends to the left side. The motor shaft 333L is connected to a second motive power transmission mechanism 350L positioned on the left side of the second electric motor 330L.

A first oil pump 370R is disposed on an inner wall of the casing 321 on the right side thereof, and a second oil pump 370L is disposed on an inner wall of the casing 321 on the left side thereof. A first oil cooler 322R is disposed on an outer wall of the casing 321 on the right side thereof, and a second oil cooler 322L is disposed on an outer wall of the casing 321 on the left side thereof. The first oil cooler 322R accommodates a part of a first discharge pipe 374R that extends to the upper side along the outer wall of the casing 321 on the right side thereof. The first oil pump 370R sucks up the oil 76 by a first suction pipe 372R and supplies the oil 76 to the motor shaft 333R of the first electric motor 330R via the first discharge pipe 374R. As a result, the oil 76 cooled by the refrigerant in the first oil cooler 322R is supplied to the first electric motor 330R. Similarly, the second oil cooler 322L accommodates a part of a second discharge pipe 374L that extends to the upper side along the outer wall of the casing 321 on the left side thereof. The second oil pump 370L sucks up the oil 76 by a second suction pipe 372L and supplies the oil 76 to the motor shaft 333L of the second electric motor 30L via the second discharge pipe 374L. As a result, the oil 76 cooled by the refrigerant in the second oil cooler 322L is supplied to the second electric motor 330L.

As shown in FIG. 6, the first inverter cooler 41R of the first inverter 40R positioned on the right side of the center line CL1 and the second oil cooler 322L positioned on the left side of the center line CL1 are connected to each other by a first midstream route 367R in this embodiment as well. The second inverter cooler 41L of the second inverter 40L positioned on the left side of the center line CL1 and the first oil cooler 322R positioned on the right side of the center line CL1 are connected to each other by a second midstream route 367L. Therefore, each of the midstream routes 367R, 367L intersect with each other when seen from the vehicle rear side.

Although specific examples of the technology disclosed by the present specification have been described above in detail, those are merely exemplifications and do not limit the scope of claims. The technology described in the scope of claims includes those obtained by variously modifying and changing the specific examples exemplified above. Modified examples of the embodiments described above are listed below.

### Modified Example 1

In the embodiments described above, the drive apparatus 20 includes the two electric motors 30R, 30L, the two inverters 40R, 40L, and the two refrigerant routes 62R, 62L. However, the number of the electric motors, the inverters, and the refrigerant routes is not limited to two. The drive apparatus 20 may include three electric motors, three inverters, and three refrigerant routes, for example. In this case, the first electric motor and the first inverter may be electrically connected to each other, the second electric motor and the second inverter may be electrically connected to each other, and a third electric motor and a third inverter may be electrically connected to each other. The first refrigerant route may cool the first inverter and the second electric motor, the second refrigerant route may cool the second inverter and the third electric motor, and a third refrigerant route may cool the third inverter and the first electric motor. In another modified example, the drive apparatus 20 may include two electric motors that drive the pair of front wheels 4R, 4L, two electric motors that drive the pair of rear wheels 5R, 5L, and four inverters electrically connected to each of the motors. In yet another modified example, the first electric motor may drive the pair of front wheels 4R, 4L, and the second electric motor may drive the pair of rear wheels 5R, 5L. In this case, the first electric motor and the second electric motor may be arrayed in the left-right direction or may be arrayed in the front-rear direction.

### Modified Example 2

The drive apparatus 20 of the first embodiment does not necessarily need to include the electricity supply circuit 11. In this modified example, the drive apparatus 20 does not necessarily need to supply the charging electricity to the battery pack 3 via the neutral point NP of the first electric motor 30R. In this modified example, the control apparatus 80 may drive the pair of cooling fans 61R, 61L, the second radiator pump 64L and the first oil pump 70R when the rotational speed of the first electric motor 30R exceeds a predetermined value, for example. For example, the rotational speed of the first electric motor 30R that drives the right front wheel 4R may exceed the predetermined value when the electrified vehicle 10 travels a road that curves to the left side. In this modified example, one electric motor of which rotational speed is high can be efficiently cooled with use of a refrigerant that has cooled an inverter electrically connected to another electric motor of which rotational speed is low.

### Modified Example 3

The drive apparatus 20 of the first embodiment includes the two oil pumps 70R, 70L. However, the drive apparatus 20 may include one oil pump in this modified example. In this modified example, the oil 76 may be supplied to the two electric motors 30R, 30L by one oil pump. In this modified example, the one oil pump is one example of "the first oil pump" and "the second oil pump".

### Modified Example 4

The control apparatus 80 does not necessarily need to stop the second oil pump 70L during the period of charging time. In this modified example, the control apparatus 80 may drive the pair of cooling fans 61R, 61L, the pair of radiator pumps 64R, 64L, and the pair of oil pumps 70R, 70L over the period of charging time. In another modified example, the control apparatus 80 may drive the pair of cooling fans 61R, 61L, the second radiator pumps 64L, and the first oil pump 70R when the temperature of the first electric motor 30R exceeds a predetermined temperature during the period of charging time.

## Claims

1. A drive apparatus (20; 120; 220; 320), comprising:
a plurality of rotating electrical machines (30R, 30L; 330R, 330L);
a plurality of electricity conversion apparatuses (40R, 40L); and
a plurality of refrigerant routes (62R, 62L) provided to be parallel to each other and configured to cool the rotating electrical machines (30R, 30L; 330R, 330L) and the electricity conversion apparatuses (40R, 40L), wherein:
each of the electricity conversion apparatuses (40R, 40L) is electrically connected to at least one of the rotating electrical machines (30R, 30L; 330R, 330L);
each of the refrigerant routes (62R, 62L) is configured to cool at least one of the electricity conversion apparatuses (40R, 40L) and at least one of the rotating electrical machines (30R, 30L; 330R, 330L); **characterized in that**,
each of the rotating electrical machines (30R, 30L; 330R, 330L) is electrically connected to an electricity conversion apparatus (40R, 40L) different from the at least one electricity conversion apparatus (40R, 40L) cooled by the same refrigerant route (62R, 62L) as the rotating electrical machine (30R, 30L; 330R, 330L) itself.

2. The drive apparatus (20; 120; 220; 320) according to claim 1, wherein:
the rotating electrical machines (30R, 30L; 330R, 330L) include:
a first rotating electrical machine (30R; 330R); and
a second rotating electrical machine (30L; 330L);
the electricity conversion apparatuses (40R, 40L) include:
a first electricity conversion apparatus (40R) electrically connected to the first rotating electrical machine (30R; 330R); and
a second electricity conversion apparatus (40L) electrically connected to the second rotating electrical machine (30L; 330L); and
the refrigerant routes (62R, 62L) include:
a first refrigerant route (62R) configured to cool the first electricity conversion apparatus (40R) and the second rotating electrical machine (30L; 330L); and
a second refrigerant route (62L) configured to cool the second electricity conversion apparatus (40L) and the first rotating electrical machine (30R; 330R).

3. The drive apparatus (20; 120; 320) according to claim 2, further comprising:
a first oil cooler (22R; 122R; 322R) configured to cool the first rotating electrical machine (30R; 330R); and
a first oil pump (70R; 370R) configured to supply oil to the first rotating electrical machine (30R; 330R) via the first oil cooler (22R; 122R; 322R), wherein the second refrigerant route (62L) is configured to cool the oil in the first oil cooler (22R; 122R; 322R).

4. The drive apparatus (20; 120; 320) according to claim 3, further comprising:
a second oil cooler (22L; 122L; 322L) configured to cool the second rotating electrical machine (30L; 330L); and
a second oil pump (70L; 370L) configured to supply oil to the second rotating electrical machine (30L; 330L) via the second oil cooler (22L; 122L; 322L), wherein the first refrigerant route (62R) is configured to cool the oil in the second oil cooler (22L; 122L; 322L).

5. The drive apparatus (20; 120; 320) according to claim 2, further comprising a casing (21; 321) that accommodates the first rotating electrical machine (30R; 330R) and the second rotating electrical machine (30L; 330L).

6. The drive apparatus (120; 220) according to claim 2, further comprising first cooling equipment (120R) in abutment against at least a part of a front surface of a first stator (35R) of the first rotating electrical machine (30R), wherein the second refrigerant route (62L) is configured to cool the first rotating electrical machine (30R) via the first cooling equipment (120R).

7. The drive apparatus (120; 220) according to claim 6, further comprising second cooling equipment (120L) in abutment against at least a part of a front surface of a second stator (35L) of the second rotating electrical machine (30L), wherein the first refrigerant route (62R) is configured to cool the second rotating electrical machine (30L) via the second cooling equipment (120L).

8. The drive apparatus (120) according to claim 6, further comprising:
a first oil cooler (122R) configured to cool the first rotating electrical machine (30R); and
a first oil pump (70R) configured to supply oil to the first rotating electrical machine (30R) via the first oil cooler (122R), wherein:
the second refrigerant route (62L) is further configured to cool the oil in the first oil cooler (122R); and
the first cooling equipment (120R) and the first oil cooler (122R) are connected to each other in series in the second refrigerant route (62L).

9. The drive apparatus (120) according to claim 7, further comprising:
a second oil cooler (122L) configured to cool the second rotating electrical machine (30L); and
a second oil pump (70L) configured to supply oil to the second rotating electrical machine (30L) via the second oil cooler (122L), wherein:
the first refrigerant route (62R) is further configured to cool the oil in the second oil cooler (122L); and
the second cooling equipment (120L) and the second oil cooler (122L) are connected to each other in series in the first refrigerant route (62R).

10. The drive apparatus (20; 120; 220; 320) according to claim 2, wherein the drive apparatus (20; 120; 220; 320) is configured to be mounted on a vehicle (10), and configures a charging circuit (11) that supplies a charging current supplied from a power source (7) outside the vehicle (10) to an electricity storage apparatus (3) of the vehicle (10) via a neutral point (NP) of the first rotating electrical machine (30R; 330R).

11. The drive apparatus (20; 120; 320) according to claim 10, further comprising:
a first oil cooler (22R; 122R; 322R) configured to cool the first rotating electrical machine (30R; 330R);
a first oil pump (70R; 370R) configured to supply oil to the first rotating electrical machine (30R; 330R) via the first oil cooler (22R; 122R; 322R); and
a control apparatus (80) configured to control the first oil pump (70R; 370R), wherein:
the second refrigerant route (62L) is configured to cool the oil in the first oil cooler (22R; 122R; 322R); and
the control apparatus (80) drives the first oil pump (70R; 370R) in at least a part of a period of charging time in which the charging current is supplied to the electricity storage apparatus (3) of the vehicle (10) via the neutral point (NP) of the first rotating electrical machine (30R; 330R).

12. The drive apparatus (20; 120; 320) according to claim 11, further comprising:
a second oil cooler (22L; 122L; 322L) configured to cool the second rotating electrical machine (30L; 330L); and
a second oil pump (70L; 370L) configured to supply oil to the second rotating electrical machine (30L; 330R) via the second oil cooler (22L; 122L; 322L), wherein:
the first refrigerant route (62R) is configured to cool the oil in the second oil cooler (22L; 122L; 322L); and
the control apparatus (80) stops driving of the second oil pump (70L; 370L) in at least a part of the period of charging time.

13. The drive apparatus (20; 120; 220; 320) according to claim 2, wherein:
the drive apparatus (20; 120; 220; 320) is configured to be mounted on a vehicle (10);
the first rotating electrical machine (30R; 330R) is configured to transmit a motive power to a first drive wheel (4R; 5R; 4R, 5R) of a pair of left and right drive wheels (4R, 4L; 5R, 5L; 4R, 5R, 4L, 5L) of the vehicle (10); and
the second rotating electrical machine (30L; 330L) is configured to transmit a motive power to a second drive wheel (4L; 5L; 4L, 5L) of the pair of left and right drive wheels (4R, 4L; 5R, 5L; 4R, 5R, 4L, 5L) of the vehicle (10).

## Patentansprüche

1. Antriebsvorrichtung (20; 120; 220; 320), die Folgendes umfasst:
mehrere rotierende elektrische Maschinen (30R, 30L; 330R, 330L) ;
mehrere Stromumwandlungsvorrichtungen (40R, 40L); und
mehrere Kältemittelleitungen (62R, 62L), die so bereitgestellt sind, dass sie parallel zueinander sind, und dazu ausgebildet sind, die rotierenden elektrischen Maschinen (30R, 30L; 330R, 330L) und die Stromumwandlungsvorrichtungen (40R, 40L) zu kühlen, wobei:
jede der Stromumwandlungsvorrichtungen (40R, 40L) elektrisch mit mindestens einer der rotierenden elektrischen Maschinen (30R, 30L; 330R, 330L) verbunden ist;
jede der Kältemittelleitungen (62R, 62L) dazu ausgebildet ist, mindestens eine der Stromumwandlungsvorrichtungen (40R, 40L) und mindestens eine der rotierenden elektrischen Maschinen (30R, 30L; 330R, 330L) zu kühlen; **dadurch gekennzeichnet, dass**
jede der rotierenden elektrischen Maschinen (30R, 30L; 330R, 330L) elektrisch mit einer Stromumwandlungsvorrichtung (40R, 40L) verbunden ist, die sich von der mindestens einen Stromumwandlungsvorrichtung (40R, 40L) unterscheidet, die durch dieselbe Kältemittelleitung (62R, 62L) wie die rotierende elektrische Maschine (30R, 30L; 330R, 330L) selbst gekühlt wird.

2. Antriebsvorrichtung (20; 120; 220; 320) nach Anspruch 1, wobei:
die rotierenden elektrischen Maschinen (30R, 30L; 330R, 330L) Folgendes beinhalten:
eine erste rotierende elektrische Maschine (30R; 330R); und
eine zweite rotierende elektrische Maschine (30L; 330L); wobei die Stromumwandlungsvorrichtungen (40R, 40L) Folgendes beinhalten:
eine erste Stromumwandlungsvorrichtung (40R), die elektrisch mit der ersten rotierenden elektrischen Maschine (30R; 330R) verbunden ist; und
eine zweite Stromumwandlungsvorrichtung (40L), die elektrisch mit der zweiten rotierenden elektrischen Maschine (30L; 330L) verbunden ist; und
wobei die Kältemittelleitungen (62R, 62L) Folgendes beinhalten:
eine erste Kältemittelleitung (62R), die dazu ausgebildet ist, die erste Stromumwandlungsvorrichtung (40R) und die zweite rotierende elektrische Maschine (30L; 330L) zu kühlen; und
eine zweite Kältemittelleitung (62L), die dazu ausgebildet ist, die zweite Stromumwandlungsvorrichtung (40L) und die erste rotierende elektrische Maschine (30R; 330R) zu kühlen.

3. Antriebsvorrichtung (20; 120; 320) nach Anspruch 2, die ferner Folgendes umfasst:
einen ersten Ölkühler (22R; 122R; 322R), der dazu ausgebildet ist, die erste rotierende elektrische Maschine (30R; 330R) zu kühlen; und
eine erste Ölpumpe (70R; 370R), die dazu ausgebildet ist, Öl über den ersten Ölkühler (22R; 122R; 322R) an die erste rotierende elektrische Maschine (30R; 330R) zu liefern, wobei die zweite Kältemittelleitung (62L) dazu ausgebildet ist, das Öl in dem ersten Ölkühler (22R; 122R; 322R) zu kühlen.

4. Antriebsvorrichtung (20; 120; 320) nach Anspruch 3, die ferner Folgendes umfasst:
einen zweiten Ölkühler (22L; 122L; 322L), der dazu ausgebildet ist, die zweite rotierende elektrische Maschine (30L; 330L) zu kühlen; und
eine zweite Ölpumpe (70L; 370L), die dazu ausgebildet ist, Öl über den zweiten Ölkühler (22L; 122L; 322L) an die zweite rotierende elektrische Maschine (30L; 330L) zu liefern, wobei die erste Kältemittelleitung (62R) dazu ausgebildet ist, das Öl in dem zweiten Ölkühler (22L; 122L; 322L) zu kühlen.

5. Antriebsvorrichtung (20; 120; 320) nach Anspruch 2, ferner umfassend ein Gehäuse (21; 321), das die erste rotierende elektrische Maschine (30R; 330R) und die zweite rotierende elektrische Maschine (30L; 330L) aufnimmt.

6. Antriebsvorrichtung (120; 220) nach Anspruch 2, ferner umfassend eine erste Kühleinrichtung (120R) in Anlage an mindestens einem Teil einer vorderen Oberfläche eines ersten Stators (35R) der ersten rotierenden elektrischen Maschine (30R), wobei die zweite Kühlmittelleitung (62L) dazu ausgebildet ist, die erste rotierende elektrische Maschine (30R) über die erste Kühleinrichtung (120R) zu kühlen.

7. Antriebsvorrichtung (120; 220) nach Anspruch 6, ferner umfassend eine zweite Kühleinrichtung (120L) in Anlage an mindestens einem Teil einer vorderen Oberfläche eines zweiten Stators (35L) der zweiten rotierenden elektrischen Maschine (30L), wobei die erste Kältemittelleitung (62R) dazu ausgebildet ist, die zweite rotierende elektrische Maschine (30L) über die zweite Kühleinrichtung (120L) zu kühlen.

8. Antriebsvorrichtung (120) nach Anspruch 6, die ferner Folgendes umfasst:
einen ersten Ölkühler (122R), der dazu ausgebildet ist, die erste rotierende elektrische Maschine (30R) zu kühlen; und
eine erste Ölpumpe (70R), die dazu ausgebildet ist, Öl über den ersten Ölkühler (122R) an die erste rotierende elektrische Maschine (30R) zu liefern, wobei:
die zweite Kältemittelleitung (62L) ferner dazu ausgebildet ist, das Öl in dem ersten Ölkühler (122R) zu kühlen; und
die erste Kühleinrichtung (120R) und der erste Ölkühler (122R) in der zweiten Kältemittelleitung (62L) in Reihe miteinander verbunden sind.

9. Antriebsvorrichtung (120) nach Anspruch 7, die ferner Folgendes umfasst:
einen zweiten Ölkühler (122L), der dazu ausgebildet ist, die zweite rotierende elektrische Maschine (30L) zu kühlen; und
eine zweite Ölpumpe (70L), die dazu ausgebildet ist, Öl über den zweiten Ölkühler (122L) an die zweite rotierende elektrische Maschine (30L) zu liefern, wobei:
die erste Kältemittelleitung (62R) ferner dazu ausgebildet ist, das Öl in dem zweiten Ölkühler (122L) zu kühlen; und
die zweite Kühleinrichtung (120L) und der zweite Ölkühler (122L) in der ersten Kältemittelleitung (62R) in Reihe miteinander verbunden sind.

10. Antriebsvorrichtung (20; 120; 220; 320) nach Anspruch 2, wobei die Antriebsvorrichtung (20; 120; 220; 320) dazu ausgebildet ist, an einem Fahrzeug (10) montiert zu sein, und einen Ladeschaltkreis (11) ausbildet, der einen von einer Stromquelle (7) außerhalb des Fahrzeugs (10) gelieferten Ladestrom über einen Neutralpunkt (NP) der ersten rotierenden elektrischen Maschine (30R; 330R) an eine Stromspeichervorrichtung (3) des Fahrzeugs (10) liefert.

11. Antriebsvorrichtung (20; 120; 320) nach Anspruch 10, die ferner Folgendes umfasst:
einen ersten Ölkühler (22R; 122R; 322R), der dazu ausgebildet ist, die erste rotierende elektrische Maschine (30R; 330R) zu kühlen;
eine erste Ölpumpe (70R; 370R), die dazu ausgebildet ist, Öl über den ersten Ölkühler (22R; 122R; 322R) an die erste rotierende elektrische Maschine (30R; 330R) zu liefern; und
eine Steuervorrichtung (80), die dazu ausgebildet ist, die erste Ölpumpe (70R; 370R) zu steuern, wobei:
die zweite Kältemittelleitung (62L) dazu ausgebildet ist, das Öl in dem ersten Ölkühler (22R; 122R; 322R) zu kühlen; und
die Steuervorrichtung (80) die erste Ölpumpe (70R; 370R) in mindestens einem Teil einer Ladezeitperiode antreibt, in der der Ladestrom über den Neutralpunkt (NP) der ersten rotierenden elektrischen Maschine (30R; 330R) an die Stromspeichervorrichtung (3) des Fahrzeugs (10) geliefert wird.

12. Antriebsvorrichtung (20; 120; 320) nach Anspruch 11, die ferner Folgendes umfasst:
einen zweiten Ölkühler (22L; 122L; 322L), der dazu ausgebildet ist, die zweite rotierende elektrische Maschine (30L; 330L) zu kühlen; und
eine zweite Ölpumpe (70L; 370L), die dazu ausgebildet ist, Öl über den zweiten Ölkühler (22L; 122L; 322L) an die zweite rotierende elektrische Maschine (30L; 330R) zu liefern, wobei:
die erste Kältemittelleitung (62R) dazu ausgebildet ist, das Öl in dem zweiten Ölkühler (22L; 122L; 322L) zu kühlen; und
die Steuervorrichtung (80) ein Antreiben der zweiten Ölpumpe (70L; 370L) in mindestens einem Teil der Ladezeitperiode stoppt.

13. Antriebsvorrichtung (20; 120; 220; 320) nach Anspruch 2, wobei:
die Antriebsvorrichtung (20; 120; 220; 320) dazu ausgebildet ist, an einem Fahrzeug (10) montiert zu sein;
die erste rotierende elektrische Maschine (30R; 330R) dazu ausgebildet ist, eine Antriebsleistung auf ein erstes Antriebsrad (4R; 5R; 4R, 5R) eines Paars von linken und rechten Antriebsrädern (4R, 4L; 5R, 5L; 4R, 5R, 4L, 5L) des Fahrzeugs (10) zu übertragen; und
die zweite rotierende elektrische Maschine (30L; 330L) dazu ausgebildet ist, eine Antriebsleistung auf ein zweites Antriebsrad (4L; 5L; 4L, 5L) des Paars von linken und rechten Antriebsrädern (4R, 4L; 5R, 5L; 4R, 5R, 4L, 5L) des Fahrzeugs (10) zu übertragen.

## Revendications

1. Appareil d'entraînement (20 ; 120 ; 220 ; 320), comprenant :
une pluralité de machines électriques tournantes (30R, 30L ; 330R, 330L) ;
une pluralité d'appareils de conversion d'électricité (40R, 40L) ; et
une pluralité de chemins de fluide frigorigène (62R, 62L) agencés parallèlement les uns aux autres et configurés pour refroidir les machines électriques tournantes (30R, 30L ; 330R, 330L) et les appareils de conversion d'électricité (40R, 40L), où :
chacun des appareils de conversion d'électricité (40R, 40L) est connecté électriquement à au moins l'une des machines électriques tournantes (30R, 30L ; 330R, 330L) ; chacun des chemins de fluide frigorigène (62R, 62L) est configuré pour refroidir au moins l'un des appareils de conversion d'électricité (40R, 40L) et au moins l'une des machines électriques tournantes (30R, 30L ; 330R, 330L) ; **caractérisé en ce que**,
chacune des machines électriques tournantes (30R, 30L ; 330R, 330L) est connectée électriquement à un appareil de conversion d'électricité (40R, 40L) différent de l'au moins un appareil de conversion d'électricité (40R, 40L) refroidi par le même chemin de fluide frigorigène (62R, 62L) que la machine électrique tournante (30R, 30L ; 330R, 330L) elle-même.

2. Appareil d'entraînement (20 ; 120 ; 220 ; 320) selon la revendication 1, dans lequel :
les machines électriques tournantes (30R, 30L ; 330R, 330L) comprennent :
une première machine électrique tournante (30R ; 330R) ; et
une seconde machine électrique tournante (30L ; 330L) ; les appareils de conversion d'électricité (40R, 40L) comprennent :
un premier appareil de conversion d'électricité (40R) connecté électriquement à la première machine électrique tournante (30R ; 330R) ; et
un second appareil de conversion d'électricité (40L) connecté électriquement à la seconde machine électrique tournante (30L ; 330L) ; et
les chemins de fluide frigorigène (62R, 62L) comprennent :
un premier chemin de fluide frigorigène (62R) configuré pour refroidir le premier appareil de conversion d'électricité (40R) et la second machine électrique tournante (30L ; 330L) ; et
un second chemin de fluide frigorigène (62L) configuré pour refroidir le second appareil de conversion d'électricité (40L) et la première machine électrique tournante (30R ; 330R).

3. Appareil d'entraînement (20 ; 120 ; 320) selon la revendication 2, comprenant en outre :
un premier refroidisseur d'huile (22R ; 122R ; 322R) configuré pour refroidir la première machine électrique tournante (30R ; 330R) ; et
une première pompe à huile (70R ; 370R) configurée pour alimenter en huile la première machine électrique tournante (30R ; 330R) via le premier refroidisseur d'huile (22R ; 122R ; 322R), le second chemin de fluide frigorigène (62L) étant configuré pour refroidir l'huile dans le premier refroidisseur d'huile (22R ; 122R ; 322R).

4. Appareil d'entraînement (20 ; 120 ; 320) selon la revendication 3, comprenant en outre :
un second refroidisseur d'huile (22L ; 122L ; 322L) configuré pour refroidir la seconde machine électrique tournante (30L ; 330L) ; et
une seconde pompe à huile (70L ; 370L) configurée pour alimenter en huile la seconde machine électrique tournante (30L ; 330L) via le second refroidisseur d'huile (22L ; 122L ; 322L), le premier chemin de fluide frigorigène (62R) étant configuré pour refroidir l'huile dans le second refroidisseur d'huile (22L ; 122L ; 322L).

5. Appareil d'entraînement (20 ; 120 ; 320) selon la revendication 2, comprenant en outre un carter (21 ; 321) qui loge la première machine électrique tournante (30R ; 330R) et la seconde machine électrique tournante (30L ; 330L).

6. Appareil d'entraînement (120 ; 220) selon la revendication 2, comprenant en outre un premier équipement de refroidissement (120R) en butée contre au moins une partie d'une surface avant d'un premier stator (35R) de la première machine électrique tournante (30R), le second chemin de fluide frigorigène (62L) étant configuré pour refroidir la première machine électrique tournante (30R) via le premier équipement de refroidissement (120R).

7. Appareil d'entraînement (120 ; 220) selon la revendication 6, comprenant en outre un second équipement de refroidissement (120L) en butée contre au moins une partie d'une surface avant d'un second stator (35L) de la seconde machine électrique tournante (30L), le premier chemin de fluide frigorigène (62R) étant configuré pour refroidir la seconde machine électrique tournante (30L) via le second équipement de refroidissement (120L).

8. Appareil d'entraînement (120) selon la revendication 6, comprenant en outre :
un premier refroidisseur d'huile (122R) configuré pour refroidir la première machine électrique tournante (30R) ; et
une première pompe à huile (70R) configurée pour alimenter en huile la première machine électrique tournante (30R) via le premier refroidisseur d'huile (122R), où :
le second chemin de fluide frigorigène (62L) est en outre configuré pour refroidir l'huile dans le premier refroidisseur d'huile (122R) ; et
le premier équipement de refroidissement (120R) et le premier refroidisseur d'huile (122R) sont connectés l'un à l'autre en série sur le second chemin de fluide frigorigène (62L).

9. Appareil d'entraînement (120) selon la revendication 7, comprenant en outre :
un second refroidisseur d'huile (122L) configuré pour refroidir la seconde machine électrique tournante (30L) ; et
une seconde pompe à huile (70L) configurée pour alimenter en huile la seconde machine électrique tournante (30L) via le second refroidisseur d'huile (122L), où :
le premier chemin de fluide frigorigène (62R) est en outre configuré pour refroidir l'huile dans le second refroidisseur d'huile (122L) ; et
le second équipement de refroidissement (120L) et le second refroidisseur d'huile (122L) sont connectés l'un à l'autre en série sur le premier chemin de fluide frigorigène (62R).

10. Appareil d'entraînement (20 ; 120 ; 220 ; 320) selon la revendication 2, dans lequel l'appareil d'entraînement (20 ; 120 ; 220 ; 320) est configuré pour être monté sur un véhicule (10), et configure un circuit de charge (11) qui fournit un courant de charge fourni par une source d'alimentation (7) externe au véhicule (10) à un appareil de stockage d'électricité (3) du véhicule (10) via un point neutre (NP) de la première machine électrique tournante (30R ; 330R).

11. Appareil d'entraînement (20 ; 120 ; 320) selon la revendication 10, comprenant en outre :
un premier refroidisseur d'huile (22R ; 122R ; 322R) configuré pour refroidir la première machine électrique tournante (30R ; 330R) ;
une première pompe à huile (70R ; 370R) configurée pour alimenter en huile la première machine électrique tournante (30R ; 330R) via le premier refroidisseur d'huile (22R ; 122R ; 322R) ; et
un appareil de commande (80) configuré pour commander la première pompe à huile (70R ; 370R), où :
le second chemin de fluide frigorigène (62L) est configuré pour refroidir l'huile dans le premier refroidisseur d'huile (22R ; 122R ; 322R) ; et
l'appareil de commande (80) entraîne la première pompe à huile (70R ; 370R) pendant au moins une partie d'une période de temps de charge pendant laquelle le courant de charge est fourni à l'appareil de stockage d'électricité (3) du véhicule (10) via le point neutre (NP) de la première machine électrique tournante (30R ; 330R).

12. Appareil d'entraînement (20 ; 120 ; 320) selon la revendication 11, comprenant en outre :
un second refroidisseur d'huile (22L ; 122L ; 322L) configuré pour refroidir la seconde machine électrique tournante (30L ; 330L) ; et
une second pompe à huile (70L ; 370L) configurée pour alimenter en huile la seconde machine électrique tournante (30L ; 330R) via le second refroidisseur d'huile (22L ; 122L ; 322L), où :
le premier chemin de fluide frigorigène (62R) est configuré pour refroidir l'huile dans le second refroidisseur d'huile (22L ; 122L ; 322L) ; et
l'appareil de commande (80) arrête l'entraînement de la seconde pompe à huile (70L ; 370L) pendant au moins une partie de la période de charge.

13. Appareil d'entraînement (20 ; 120 ; 220 ; 320) selon la revendication 2, dans lequel :
l'appareil d'entraînement (20 ; 120 ; 220 ; 320) est configuré pour être monté sur un véhicule (10) ;
la première machine électrique tournante (30R ; 330R) est configurée pour transmettre une puissance motrice à une première roue motrice (4R ; 5R ; 4R, 5R) d'une paire de roues motrices gauche et droite (4R, 4L ; 5R, 5L ; 4R, 5R, 4L, 5L) du véhicule (10) ; et
la seconde machine électrique tournante (30L ; 330L) est configurée pour transmettre une puissance motrice à une seconde roue motrice (4L ; 5L ; 4L, 5L) de la paire de roues motrices gauche et droite (4R, 4L ; 5R, 5L ; 4R, 5R, 4L, 5L) du véhicule (10).
